# EUROPÄISCHE PATENTSCHRIFT

(11) **EP 0 961 725 B1**
(45) Veröffentlichungstag und Bekanntmachung des Hinweises auf die Patenterteilung: **06.02.2002**
(21) Anmeldenummer: 98912412.8
(22) Anmeldetag: 27.02.1998
(51) Int. Cl.: B62D 21/10, B62D 31/00

(54) **PERSONENKRAFTWAGEN**
PASSENGER CAR
VOITURE DE TOURISME

(30) Priorität: 28.02.1997 DE 29703663 U
(43) Veröffentlichungstag der Anmeldung: 08.12.1999
(73) Patentinhaber: Sommer, Ulrich, 81373 Munchen (DE)
(72) Erfinder: Sommer, Ulrich, 81373 Munchen (DE)
(74) Vertreter: Gritschneder, Martin, Dipl.-Phys.
(86) Internationale Anmeldenummer: EP9801114
(87) Internationale Veröffentlichungsnummer: WO9838073

(56) Entgegenhaltungen:
- WO-A-97/11874
- DE-B- 1 059 779
- FR-A- 2 142 843
- FR-A- 2 191 519
- GB-A- 177 164
- US-A- 2 533 752
- US-A- 2 656 214
- US-A- 3 002 782

## Beschreibung

Die Erfindung betrifft einen Personenkraftwagen mit einer tragenden Struktur, bestehend aus mindestens zwei Längsträgern, deren vertikale Erstreckung zur Erhöhung der Biegesteifigkeit um die Querachse so groß ist, daß ihre Oberkante mindestens auf der Höhe der Sitzfläche des Fahrersitzes liegt, und welche im Mittelbereich durch einen torsionssteifen Querträger verbunden sind, der als großvolumiges Rohrprofil ausgeführt ist.

Bekannt ist das Prinzip des Monochocks, bei dem ein Hohlprofil als Längsträger mit nur kleinen Öffnungen für die Insassen die Steifigkeit und den Insassenschutz gewährleisten, und der Zündapp Janus, bei dem die Sitze an einen querliegenden Tunnel angelehnt sind.

Bei herkömmlichen für den Straßenverkehr zugelassenen Pkws kann die Zelle beim Frontal- und Heckaufprall die Kräfte von den Knautschzonen nicht dort weiterleiten, wo sie eingeleitet werden, sondern verteilt sie auf Bodengruppe und Dach um die Einstiegsöffnungen herum. Die Umleitung der Kräfte erfordert den vermehrten Einsatz von Material und erhöht so das Gewicht. Die Einstiegsöffnungen erweisen sich auch beim Seitenaufprall als gefährliche Schwachstelle für den Insassenschutz und verringern die Steifigkeit des Fahrzeuges erheblich. Bei Monochocks ist zwar für den Insassenschutz besser gesorgt, die in diesem Fall jedoch oben offene Struktur bedarf immer noch der Torsionssteifigkeit des Längsträgers und einer möglichst kleinen Öffnung, um diese nicht zu beeinträchtigen. Der normale Ein- bzw. Ausstieg und die Befreiung der Insassen aus einem umgestürzten Fahrzeug wird erschwert. So finden diese Monochocks vorwiegend im Rennsport Verwendung.

Bekannt ist auch eine Struktur mit querliegendem Tunnel in der Fahrzeugmitte und einer nicht durch Türen unterbrochenen Seitenfläche beim Zündapp Janus. Der Querträger ist nach unten offen und damit nicht torsionssteif. Diese Struktur erhält ihre Verwindungssteifigkeit durch Einbeziehung des Fahrzeugdaches in die Struktur. Da das Fahrzeug nach vorne und nach hinten mit den Türen abschließt, ist die Anbindung einer Knautschzone bei diesem Prinzip problematisch.

Aus FR-A-2 191 519 ist ein Personkraftwagen mit einer tragenden Struktur bekannt, die aus zwei Längsträgern besteht. Die Oberkante der Längsträger liegt auf der Höhe der Sitzfläche des Fahrersitzes. Die Längsträger sind von der Bodenplatte getrennte Elemente. In einem Überrollbügel ist ein schmaler Querträger integriert, so daß unterhalb des Querträgers hinter den vorderen Sitzen Raum für die Unterbringung des Reserverads bleibt.

Etwa Ende des Jahres 1995 wurde von der britischen Firma Lotus ein Personkraftwagen mit einer tragenden Struktur hergestellt, die aus zwei Längsträgern bestand, deren Oberkante über der Sitzfläche des Fahrersitzes lag. Die Längsträger wurden im Mittelbereich zu einem torsionsteifen Querträger verbunden, der als großvolumiges Rohrprofil ausgeführt war.

Der Erfindung liegt die Aufgabe zugrunde, bei minimalem Materialeinsatz einen verbesserten Insassenschutz und höhere Steifigkeit gegenüber den bekannten PKWs zu erzielen.

Diese Aufgabe wird bei einem Personenkraftwagen der eingangs genannten Art dadurch gelöst, daß der torsionssteife Querträger zumindest Teile des Antriebs aufnimmt und daß die Längsträger als Abwinklung einer Bodenplatte an der Seite nach oben ausgebildet sind.

Durch die erfindungsgemäße Ausbildung eines Personenkraftwagens wird erreicht, daß die tragende Struktur die bei einem Aufprall eingeleiteten Kräfte geradlinig weiterleitet. Die tragende Struktur kann an den Stellen, an denen Kräfte auftreten, besonders kräftig ausgebildet werden und ihre Torsionssteifigkeit wird nicht durch die Größe der Einstiegsöffnungen begrenzt.

Die durch die Erfindung erzielbaren Vorteile bestehen insbesondere darin, daß eine Funktionsvereinigung von Strukturelementen des Antriebs, des Fahrwerks, der Sitze und der Sicherheitsgurte sowohl im Fahrbetrieb als auch bei einem Aufprall aus verschiedenen Richtungen weitestgehend erreichbar ist. Der Ein- und Ausstieg ist unkompliziert. Eine Befreiung der Insassen nach einem Unfall, insbesondere bei umgestürztem Fahrzeug, ist gewährleistet.

Ein Personenkraftwagen gemäß der Erfindung bietet bei minimalem Materialeinsatz ein hohes Maß an Steifigkeit im Fahrbetrieb und an Festigkeit der Zelle bei Frontal- und Seitenaufprall. Da das Dach kein tragendes Element der Struktur ist, kann der Einstieg nach oben erweitert werden und das Fahrzeug ohne Mehrgewicht auch als Cabriolet verwendet werden.

Bevorzugte Ausgestaltungen der Erfindung sind in den Unteransprüchen angegeben.

Ein Ausführungsbeispiel der Erfindung wird nachfolgend anhand der Zeichnung erläutert. Es zeigen:
- Fig. 1: in einer perspektivischen Darstellung die tragenden Elemente eines Personenkraftwagens;
- Fig. 2: die tragenden Elemente in einer Explosionsdarstellung;
- Fig. 3: in Seitenansicht einen Personenkraftwagen mit geöffneter Front- und Hecktüre;
- Fig. 4: in Seitenansicht ein Cabriolet; und
- Fig. 5 und 6: eine lösbare Verbindungsstelle von Karosserieteilen.

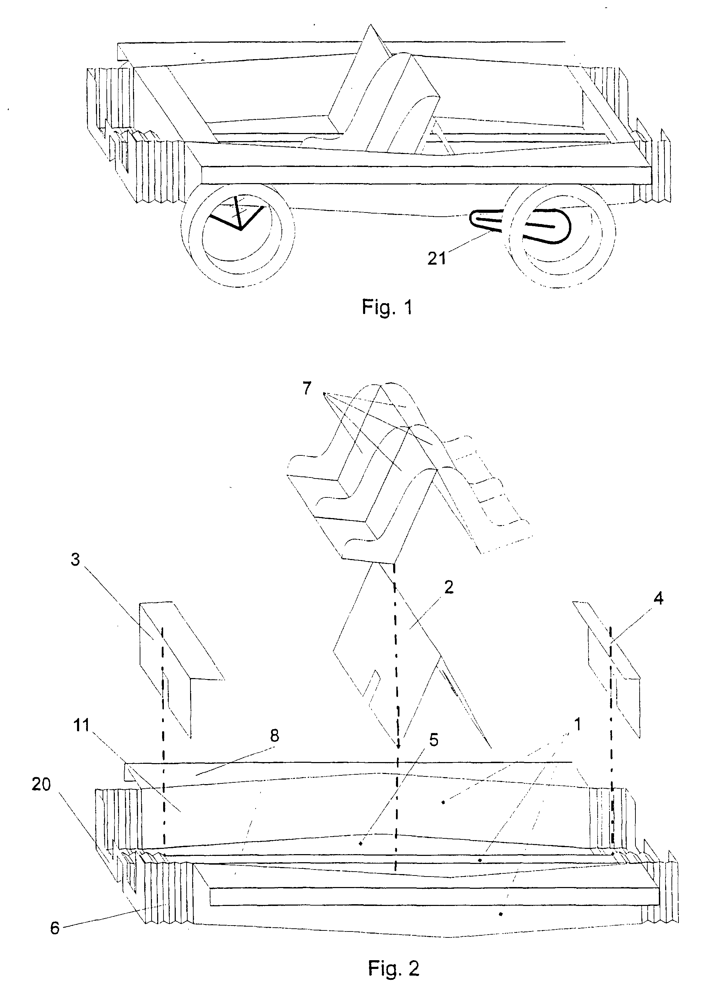

Die Fig. 1 und 2 zeigen die tragende Struktur eines Personenkraftwagens. Drei Längsträger 1, eine Bodenplatte 5 mit einem integrierten dritten Längsträger 1 in der Mitte und zwei Knautschzonen 6 an den vorderen und hinteren Enden der Längsträger 1 sind als ein umgekehrtes hutförmiges (Blech-) Längsprofil 11 ausgeführt, welches sich über fast die gesamte Fahrzeuglänge erstreckt. Der dritte Längsträger 1 wird durch eine einem Kardantunnel vergleichbare Eindellung in der Mitte des hutförmigen Längsprofils gebildet. Vertikale Seitenwände des Längsprofils 11 fungieren als Längsträger 1 und sind an den oberen Rändern nach außen und nach unten abgewinkelt wodurch sie auf der Oberseite Gurte 8 aufweisen. Die Gurte 8 können auch als Vierkantrohr ausgebildet sein. Die beiden Längsträger 1 sind ungefähr in der Mitte oder kurz dahinter durch einen torsionssteifen Querträger 2 verbunden. An dem vorderen und hinteren Ende sind durch feine Querrippen Sollknickstellen für die Knautschzone einteilig ausgeführt. Zwei Querträger 3,4 vorne und hinten sind als vertikale, oben zur Versteifung abgewinkelte Platten ausgeführt, welche damit auch den Fahrgastraum nach vorne bzw. hinten begrenzen. Ein torsionssteifer Querträger 2 ist lediglich ein nach unten im spitzen Winkel abgewinkeltes Blech (Platte), welches mit der Bodenplatte 5 und den Seitenwänden 1 fest verbunden ist und erst zusammen mit der Bodenplatte 5 zum geschlossenen Profil mit dreieckigem Rohrquerschnitt wird. Die anderen beiden Flächen stützen die Rückenlehnen von vorderen und von entgegen der Fahrtrichtung liegenden hinteren Sitze ab und sind mit den Längsträgern 1 und den oberen Gurten 8 der Längsträger 1 verbunden.

Die Längsträger 1 und eventuell die Bodenplatte sind nach vorne in Form der energieabsorbierenden Knautschzone 6 vor dem vorderen Querträger 3 verlängert und am vorderen Ende durch eine Stoßstange 20 miteinander verbunden, welche ein Eindringen von Hindernissen in der Mitte und ein einseitiges Wegknicken einer Knautschzone 6 verhindert. Nach hinten ist eine entsprechende Knautschzone hinter dem hinteren Querträger 4 zweckmäßig (in Fig. 1 nicht dargestellt).

Der Raum im Inneren des Querträgers 2 nimmt den Motor mit Getriebe und Differentialgetriebe sowie Schwenkachsen von Längslenkern der Hinterräder und den Tank auf. Auch eine Verbundlenker-Radaufhängung ist bei gleicher Anordnung denkbar. Der Antrieb erfolgt durch Antriebswellen in der Schwenkachse der Längslenker über Ritzel an den Enden der Antriebswellen und Ketten oder Zahnriemen 21 auf mit den Hinterrädern fest verbundene Ritzel. So bleibt der Raum zwischen den Hinterrädern für die hinteren Insassen frei.

Federbeine für eine McPherson-Achsaufhängung der Vorderräder sind an den oberen Gurten 8 der Längsträger 1 angebracht, dazugehörige Querlenker an der Kante zwischen Bodenplatte 5 und längsträger 1.

Vier Sitze 7 sind als Schalensitze mit weit herumgezogenen Seitenwangen ausgebildet und übernehmen somit auch die Schutzfunktion bei Seitenaufprall. Zur Sicherstellung der seitlichen Schutzfunktion der Sitze 7 ist die Verwendung von Vierpunktgurten vorteilhaft. Die Gurte sind im torsionssteifen Querträger 2 verankert. Die Seitenwangen der Sitze 7 sind auf der Außenseite an den Längsträgern 1 befestigt und abgestützt. Dabei sollte eventuell vorhandener Raum zwischen den Sitzen 7 und den Längsträgern 1 für eine beim Seitenaufprall Energie aufnehmende Abstützung genützt werden. Die nebeneinanderliegenden Seitenwangen zweier nebeneinanderliegender Sitze 7 auf der Innenseite sind direkt miteinander verbunden. Alle vier Sitze 7 stützen sich mit der Rückenlehne gegen den mittleren Querträger 2 ab. Befestigungselemente zwischen Lehne und torsionssteifem Querträger 2 sollten schwingungsdämpfend ausgeführt sein, um Schwingungen des Motors nicht vom Querträger 2 auf die Sitze 7 zu übertragen. Die hinteren Sitze weisen entgegen der Fahrtrichtung, so daß sich die Kopfstützen der vorderen und der hinteren Sitze oberhalb des Querträgers 2 berühren können. So ist es möglich, alle vier Sitze als eine zusammenhängende (Kunststoff-) Schale auszubilden. Durch die vielfache Abstützung der Sitze 7 gegeneinander und in der Struktur können diese wesentlich leichter gebaut werden, als übliche freistehende Sitze, welche die Kräfte nur in den Fahrzeugboden ableiten können. Auch die Anbindungspunkte werden so weniger belastet. Wird der Raum zwischen den Sitzen und dem Querträger 2 mit einem Dämmstoff aufgefüllt, ist eine wirkungsvolle Schallisolierung des prinzipiell akustisch ungünstigen Mittelmotors zu realisieren. Zusammen mit dem Dämmstoff wirkt die Ausführung aller Sitze als geschlossene Schale schallabschirmend. Da der Fahrersitz durch die Fixierung in der Struktur nicht verfahrbar ist, sind die Pedale auf einem Schlitten in Längsrichtung verfahrbar angebracht. Auch eine Verstellmöglichkeit des Lenkrades in Längsrichtung ist zur Anpassung an die Körpergröße des Fahrers/der Fahrerin sinnvoll.

Zwischen den vorderen und hinteren Sitzen ist an den Längsträgern 1 und dem Querträger 2 ein Überrollbügel befestigt, der nicht im Fahrzeugdach 11 integriert ist. Die Aufgabe des Überrollbügels kann auch die Sitzschale 7 übernehmen, wenn sie ausreichend stabil ausgeführt ist und deren Kopfstützen bis zum Fahrzeugdach-verlängert werden.

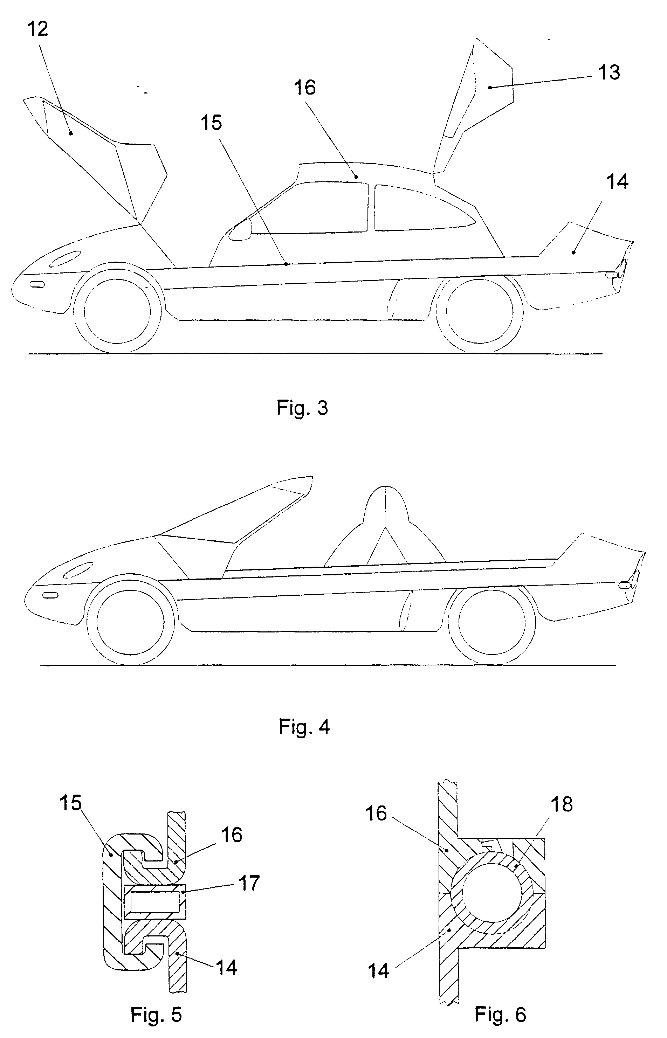

Aufgrund der hohen Einstiegsunterkante (oberer Gurt 8 des Längsträgers 1) ist es erforderlich, die Einstiegstüren nach oben zu erweitern. Daher sind zwei Türen 12, 13 (Fig. 3) über die gesamte Fahrzeugbreite bis zum Längsträger 1 reichend und die Frontscheibe bzw. die Heckscheibe einschließend je für die vorderen und die hinteren Insassen vorgesehen. Die Türen 12, 13 öffnen sich um ein horizontales Gelenk normal zur Fahrtrichtung nach oben. Durch die nach oben öffnenden Türen 12, 13 kann die Oberkante der äußeren Längsträger 1 wesentlich höher gelegt werden als die Türschwellen gewöhnlicher PKWs. Die Oberkante der Längsträger 1 liegt oberhalb des Fahrzeugschwerpunktes. Die vordere Tür 12 ist durch das Gelenk mit der Karosserie 14 verbunden. Dabei ist es denkbar, daß die Lenksäule, wie bei der BMW Isetta, beim Öffnen mit nach vorne schwingt, um den Aus- und Einstieg zu erleichtern. In diesem Fall ist jedoch eine Sicherung vorzusehen, welche ein Wegfahren nur bei sicher arretierter Lenksäule ermöglicht.

Das Fahrzeugdach 16 mit Seitenfenstern bildet mit der gelenkig verbundenen hinteren Tür 13 eine Einheit, die durch eine lösbare Verbindung 15 mit der Karosserie 14 verbunden ist. Zum einen ist das Fahrzeug als Cabriolet nutzbar, wenn diese Einheit abgenommen wird (siehe Fig. 4), zum anderen kann, falls das Fahrzeug nach einem Überschlag auf dem Dach zu liegen kommt, nach dem Lösen der Verbindung 15 von außen ein Notausstieg geschaffen werden. Die lösbare Verbindung kann durch Umbördelung der Karosserie 14 und des Daches 16 im Bereich der gemeinsamen Fuge einen dazwischenliegenden flüssigkeitsgefüllten Schlauch 17 und ein darüberzuschiebendes C-förmiges Profil 15 dargestellt werden. Das C-förmige Profil 15 hält die Karosserie 14 und das Dach 16 an deren Umbördelung zusammen und kann im Notfall einfach abgerissen werden oder zum regulären Entfernen des Daches 16 nach hinten oder vorne weggeschoben werden.

Eine andere Möglichkeit besteht darin, den flexiblen Schlauch 17 mit einer Druckflüssigkeit zu füllen, wobei zum Lösen der Verbindung 15 Ventile geöffnet werden, die den flexiblen Schlauch 17 entleeren.

Eine weitere Variante zum Lösen des Daches 16 ist in Fig. 6 dargestellt: Ein rundes Rohr 18 mit Arretierhaken auf der oberen Seite ist unten an der Karosserie 14 drehbar gelagert festgehalten und hält auf der Oberseite das Dach 16 mit Hilfe der Arretierhaken. Zwei mit dem Rohr 18 fest verbundene Handhebel auf der Fahrzeuginnenseite, in Reichweite jeweils der vorderen und hinteren Insassen (in der Figur nicht dargestellt), und ein weiterer Hebel auf der Fahrzeugaussenseite sind so angeordnet, daß durch eine Bewegung der Hebel weg von der Fahrzeugwandung die Arretierhaken das Dach 16 freigeben.

## Patentansprüche

1. Personenkraftwagen mit einer tragenden Struktur, bestehend aus mindestens zwei Längsträgern (1), deren vertikale Erstreckung zur Erhöhung der Biegesteifigkeit um die Querachse so groß ist, daß ihre Oberkante mindestens auf der Höhe der Sitzfläche des Fahrersitzes (7) liegt und welche im Mittelbereich durch einen torsionssteifen Querträger (2) verbunden sind, der als großvolumiges Rohrprofil ausgeführt ist, **dadurch gekennzeichnet, daß** der torsionssteife Querträger (2) zumindest Teile des Antriebes aufnimmt und daß die Längsträger (1) als Abwinkelung einer Bodenplatte (5) an der Seite nach oben ausgebildet sind.

2. Personenkraftwagen nach Anspruch 1, bei dem die Längsträger (1) an der Oberkante ein oder zweifach nach außen und unten abgewinkelt sind, so daß an der Oberkante des Längsträgers ein starker Längsgurt (8) entsteht.

3. Personenkraftwagen nach Anspruch 1 oder 2, bei dem die vorderen Sitze (7) seitlich an den Längsträger (1) und/oder mit der Lehne an dem torsionssteifen Querträger (2) und/oder mit der Sitzfläche am Boden (5) befestigt sind.

4. Personenkraftwagen nach einem der vorausgehenden Ansprüche, bei dem hintere Sitze (7) in gleicher Weise wie die Vordersitze (7), jedoch entgegen der Fahrtrichtung in die Struktur eingebunden sind.

5. Personenkraftwagen nach einem der vorausgehenden Ansprüche, bei dem die vertikale Erstreckung der Längsträger (1) so groß ist, daß die Linie zwischen dem Fahrzeugschwerpunkt und der Prallfläche eines Frontalaufpralls oder Heckaufpralls im wesentlichen nicht oberhalb der Längsträger verläuft.

6. Personenkraftwagen nach einem der vorausgehenden Ansprüche, bei dem die Längsträger (1) an den vorderen und hinteren Enden durch zusätzliche Querträger (3, 4) miteinander verbunden sind.

7. Personenkraftwagen nach Anspruch 6, bei dem sich die Längsträger (1) nahezu über die gesamte Fahrzeuglänge erstrekken und vor dem vorderen Querträger (3) bzw. hinter dem hinteren Querträger (4) als energieabsorbierende Knautschzone (6) ausgebildet sind.

8. Personenkraftwagen nach Anspruch 7, bei dem der in die Bodenplatte (5) integrierte dritte Längsträger (1) als eine hohe nach oben gerichtete Längssicke der Bodenplatte in der Fahrzeugmitte ausgebildet ist, und die Bodenplatte (5) mit den Längsträgern zur Darstellung der Knautschzonen (6) an dem vorderen und hinteren Ende leicht quergerippt ist.

9. Personenkraftwagen nach einem der vorausgehenden Ansprüche, bei dem der Ein- und Ausstieg durch nach oben und vorne bzw. hinten klappende Türen (12, 13) über die gesamte Fahrzeugbreite freigegeben wird, wobei die Türen (12, 13) die Windschutz- bzw. Heckscheibe einschließen.

10. Personenkraftwagen nach einem der vorausgehenden Ansprüche, bei dem das Fahrzeugdach (16) mit Seitenfenstern als Teil der Karosserie oberhalb der Längsträger (1) und zwischen den Einstiegsöffnungen (12, 13) als elastisches, vom Fahrzeug abtrennbares Teil ausgeführt ist, so daß das Fahrzeug einerseits als Cabriolet verwendbar ist und anderseits ein Notausstieg geschaffen werden kann, falls das Fahrzeug nach einem Überschlag auf dem Dach zu liegen kommt.

11. Personenkraftwagen nach einem der vorausgehenden Ansprüche, bei dem mindestens die vorderen Radaufhängungen an die Längsträger (1) angebunden sind.

12. Personenkraftwagen nach einem der vorausgehenden Ansprüche, bei dem mindestens die hinteren Radaufhängungen als Längslenker oder Verbundlenker ausgeführt sind, und an den torsionssteifen Querträger (2) angebunden sind.

## Claims

1. Passenger car with a supporting structure, consisting of at least two longitudinal beams (1) the vertical extension of which, in order to increase the flexural rigidity about the transverse axis, is sufficiently great that the top edge is located at least at the height of the seating-surface of the driver's seat (7), and which are joined together in the middle by means of a torsionally rigid cross-beam (2) which is constructed as a largevolume tubular profile, **characterized in that** the torsionally rigid cross-beam (2) accommodates at least parts of the drive unit and that the longitudinal beams (1) are formed as upward-bends of a floor panel (5) at the side.

2. Passenger car according to claim 1, in which the longitudinal beams (1) at the top edge are bent over once or twice outwards and downwards, so that a strong longitudinal flange (8) is formed on the top edge of the longitudinal beam.

3. Passenger car according to claim 1 or 2, in which the front seats (7) are fixed at the side to the longitudinal beams (1) and/or via the seat-back to the torsion-resistant cross-beam (2) and/or via the seat surface to the floor (5).

4. Passenger car according to any one of the previous claims, in which rear seats (7) are incorporated in the structure in the same way as the front seats (7) but rearward-facing.

5. Passenger car according to any one of the previous claims, in which the vertical extension of the longitudinal beams (1) is so great that the line between the centre of gravity of the vehicle and the impact surface of a frontal or rear collision does not run substantially above the longitudinal beams.

6. Passenger car according to any one of the previous claims, in which the longitudinal beams (1) are interconnected at the front and rear ends by additional crossbeams (3, 4).

7. Passenger car according to claim 6, in which the longitudinal beams (1) extend nearly over the entire length of the vehicle and are formed as energy-absorbing crumple zones (6) in front of the front cross-beam (3) and/or behind the rear cross-beam (4).

8. Passenger car according to claim 7, in which the third longitudinal beam (1) integrated into the floor panel (5) is formed as a high, upwardly-directed longitudinal corrugation of the floor panel in the middle of the vehicle, and the floor panel (5) together with the longitudinal beams is slightly cross-corrugated at the front and back ends to define the crumple zones (6).

9. Passenger car according to any one of the previous claims, in which entry and exit is possible through doors (12, 13) folding upwards and to the front or respectively the back across the entire width of the vehicle, with the doors (12, 13) incorporating the windscreen and respectively the rear window.

10. Passenger car according to any one of the previous claims, in which the vehicle roof (16) including side windows is constructed as part of the bodywork above the longitudinal beams (1) and between the door openings (12, 13) as a flexible part that can be detached from the vehicle, so that the vehicle can be used on the one hand as a convertible and on the other hand an emergency escape can be provided in the event of the vehicle coming to rest on its roof after it overturns.

11. Passenger car according to any one of the previous claims, in which at least the front wheel suspension is attached to the longitudinal beams (1).

12. Passenger car according to any one of the previous claims, in which at least the rear wheel suspension is constructed as trailing link arm or twist beam, and is attached to the torsion-resistant cross-beam (2).

## Revendications

1. Voiture particulière avec une structure porteuse, se composant d'au moins deux longerons (1), dont l'extension verticale en vue d'augmenter la résistance à la flexion autour de l'axe transversal est si grande que son bord supérieur se trouve au moins sur la hauteur de la surface d'appui du siège du conducteur (7), et lesquels longerons sont reliés, dans la zone centrale, par une traverse rigide à la torsion (2), qui est fabriquée comme profilé tubulaire à grand volume, **caractérisée en ce que** la traverse rigide à la torsion (2) reçoit au moins des parties du moteur et **en ce que** les longerons (1) sont conçus comme un pliage en U d'une plaque de plancher (5) sur le côté vers le haut.

2. Voiture particulière selon la revendication 1, dans laquelle les longerons (1), au niveau du bord supérieur sont pliés une ou deux fois vers l'extérieur et vers le bas, de telle sorte qu'au niveau du bord supérieur du longeron apparaisse une sangle longitudinale épaisse (8).

3. Voiture particulière selon la revendication 1 ou 2, dans laquelle les sièges avant (7) sont fixés de manière latérale aux longerons (1) et/ou, avec le dossier, à la traverse rigide à la torsion (2) et/ou, avec la surface d'appui, au plancher (5).

4. Voiture particulière selon l'une quelconque des revendications précédentes, dans laquelle des sièges arrière (7) sont intégrés dans la structure de la même manière que les sièges avant (7), mais dans le sens inverse au sens de circulation.

5. Voiture particulière selon l'une quelconque des revendications précédentes, dans laquelle l'extension verticale de la traverse (1) est si grande que la ligne qui délimite le centre de gravité de la voiture et la surface de chocs d'un impact frontal ou d'un impact arrière ne s'étend sensiblement pas au-dessus de la traverse.

6. Voiture particulière selon l'une quelconque des revendications précédentes, dans laquelle les longerons (1) sont reliés l'un à l'autre aux extrémités avant et arrière par des traverses supplémentaires (3, 4).

7. Voiture particulière selon la revendication 6, dans laquelle les longerons (1) s'étendent quasiment sur toute la longueur de la voiture et sont conçues sous forme de zone déformable absorbant l'énergie (6) devant la traverse avant (3) et derrière la traverse arrière (4).

8. Voiture particulière selon la revendication 7, dans laquelle le troisième longeron (1) intégré dans la plaque de plancher (5) est conçu sous forme de bande de renforcement élevée, orientée vers le haut, de la plaque de plancher au milieu de la voiture, et la plaque de plancher (5) est légèrement nervurée transversalement au niveau des extrémités avant et arrière avec les longerons pour représenter les zones déformables (6).

9. Voiture particulière selon l'une quelconque des revendications précédentes, dans laquelle la montée et le descente sont facilitées grâce à des portes se rabattant vers le haut et vers l'avant ou l'arrière (12, 13) sur toute la largeur de la voiture, moyennant quoi les portes (12, 13) comprennent le pare-brise et la lunette arrière.

10. Voiture particulière selon l'une quelconque des revendications précédentes, dans laquelle le toit du véhicule (16) avec des fenêtres latérales, en tant que partie de la carrosserie, au-dessus du longeron (1) et entre les ouvertures d'accès (12, 13), est construit en tant que partie souple pouvant être séparée du véhicule, de telle sorte que la voiture puisse être d'une part utilisée comme cabriolet et qu'une issue de secours puisse d'autre part être créée, au cas où la voiture se retrouve sur le toit suite à un tonneau.

11. Voiture particulière selon l'une quelconque des revendications précédentes, dans laquelle au moins les suspensions des roues avant sont reliées aux traverses (1).

12. Voiture particulière selon l'une quelconque des revendications précédentes, dans laquelle au moins les suspensions des roues arrière sont conçues sous forme de bras oscillants longitudinaux ou de bras de liaison, et sont reliées à la traverse rigide à la torsion (2).
